# FASCICULE DE BREVET EUROPEEN

(11) **EP 0 883 515 B1**
(45) Date de publication et mention de la délivrance du brevet: **24.05.2000**
(21) Numéro de dépôt: 97914382.3
(22) Date de dépôt: 12.03.1997
(51) Int. Cl.: B60P 7/12

(54) **DISPOSITIF DE FIXATION AMOVIBLE DE CHARGES CYLINDRIQUES SUR UN VEHICULE**
VORRICHTUNG ZUM LÖSBAREN BEFESTIGEN VON ZYLINDRISCHEN GEGENSTÄNDEN AUF EINEM FAHRZEUG
DEVICE FOR RELEASABLY FASTENING CYLINDRICAL OBJECTS ON A VEHICLE

(30) Priorité: 12.03.1996 FR 9603103
(43) Date de publication de la demande: 16.12.1998
(73) Titulaire: GENERAL TRAILERS FRANCE, 91042 Evry (FR)
(72) Inventeur: THIRIET, Daniel, F-54300 Rehainviller (FR); DE RAUCOURT, Olivier, F-54300 Luneville (FR)
(74) Mandataire: Phélip, Bruno
(86) Numéro de dépôt international: FR9700442
(87) Numéro de publication internationale: WO9733770

(56) Documents cités:
- EP-A- 0 460 715
- DE-A- 4 312 668

## Description

L'invention concerne un dispositif de fixation amovible de charges cylindriques telles que des bobines sur un véhicule comportant un plateau de chargement.

Lorsque des charges cylindriques telles que par exemple des bobines de câble ou des bobines d'acier laminé doivent être transportées par un véhicule routier ou ferroviaire, ces charges sont généralement disposées sur le plateau de chargement, approximativement horizontal, des véhicules de manière telle que leur axe est orienté horizontalement, soit dans le sens de la longueur du véhicule soit dans le sens de sa largeur. En conséquence, il est nécessaire de stabiliser les charges afin d'éviter qu'elles roulent sur le plateau.

Jusqu'à maintenant, l'immobilisation des charges cylindriques sur le plateau de chargement est réalisée essentiellement selon deux principes. Le premier principe consiste à confectionner des cales ayant une section sensiblement triangulaire et d'en introduire une de chaque côté de la charge entre celle-ci et le plancher du plateau. Habituellement, on dispose les cales d'abord et on les fixe sur le plancher, par exemple avec des clous, avant de déposer la charge cylindrique. En variante de ce principe, on peut utiliser des poutres chanfreinées en bois, posées et fixées sur le plateau par des clous ou des chaînes. La préparation du plateau de chargement des véhicules prend un certain temps, puisque, en général, il faut d'abord préparer les cales et les mettre en place une à une. Après la livraison des charges cylindriques, il faut retirer les cales une à une afin de libérer le plateau de chargement pour transporter des charges de nature différente.

Selon un deuxième principe, on a fixé des charges cylindriques par des sabots tels que ceux connus du document FR-1.632.257. Ces sabots sont de forme triangulaire en tôle d'acier et présentent un crochet au moyen duquel ils sont accrochés à l'aile intérieure supérieure d'un longeron du véhicule. Ce principe de fixation limite les positions possibles pour les charges cylindriques dans la mesure où leurs axes doivent être orientés dans le sens de la longueur du véhicule. De plus, ce dispositif implique un dégarnissage, au moins partiel, du plancher du plateau de chargement pour permettre l'accrochage des sabots. Il s'en suit que, après livraison des charges cylindriques, le plateau de chargement doit être libéré des sabots, et le plancher doit être reconstitué.

Indépendamment du principe choisi pour fixer les charges cylindriques sur le véhicule, la préparation du plateau de chargement pour le transport de charges cylindriques aussi bien que sa remise en état pour pouvoir l'utiliser pour d'autres types de charges implique un travail assez important et des matériaux perdus.

Selon un troisième principe connu du document DE-A-43.12.668, représentant l'état de la technique le plus pertinent, un dispositif de fixation de charges cylindriques sur un plateau de chargement d'un véhicule comprend deux profilés en U montés dans le sens de la longueur du véhicule et parallèlement l'un à l'autre et avec une distance latérale l'un de l'autre, ainsi qu'une pluralité de traverses montées par paires transversalement au profilé en U et des profilés montés par paires transversalement aux traverses et ainsi parallèlement au profilé en U. Les traverses sont montés sur les profilés en U de façon à pouvoir être adaptées facilement, quant à leur position et leur espacement, aux dimensions des charges cylindriques. Il en est de même des profilés montés transversalement par rapport aux traverses.

Ce dispositif de fixation connu est monté sur le plateau de chargement du véhicule au moyen de boulons. En conséquence, tout enlèvement du dispositif de fixation et sa remise en place sur le plateau de chargement impliquent un travail important.

Le but de l'invention est de concevoir un dispositif de maintien de charges cylindriques sur le plateau de chargement d'un véhicule, qui permet de disposer les charges cylindriques de manière que leur axe soit perpendiculaire ou parallèle à l'axe longitudinale du véhicule.

De plus, ce dispositif doit être conçu de manière à permettre un aménagement ou réaménagement rapide du plateau de chargement de véhicule et éviter le plus possible l'emploi d'éléments non réutilisables.

Le but de l'invention est atteint par un dispositif de fixation amovible de charges cylindriques telles que des bobines sur un véhicule comportant un plateau de chargement. Ce dispositif comprend une pluralité de cadres rigides destinés à être posés sur le plateau de chargement successivement les uns derrière les autres de manière à former au moins un rang de cadres. Chacun des cadres rigides est muni de deux cales inclinées amoviblement fixées sur le cadre.

Ce dispositif de fixation peut s'appliquer à tous les véhicules de transport routier, qu'il s'agisse de semi-remorques, remorques ou camions, carrossés ou non. Ce dispositif peut également s'appliquer à des véhicules ferroviaires.

La conception modulaire du dispositif de fixation selon l'invention et notamment sa facilité de pose et de dépose sans intervention sur le plateau du véhicule apporte un avantage essentiel pour l'utilisation des véhicules qui se manifeste notamment par la réutilisation des éléments de fixation et par la réduction de temps de chargement, et plus particulièrement par la réduction du temps de préparation au chargement.

Un autre avantage du dispositif de fixation selon l'invention est celui de disposer d'éléments d'un poids relativement fiable et de pouvoir ranger ces éléments sous le plateau du véhicule dans des paniers tels que ceux utilisés pour le rangement de palettes.

Ainsi, le véhicule peut être aménagé partiellement ou entièrement et à tout moment pour le transport de charges cylindriques sans recourir par exemple à une menuiserie pour fabriquer des cales.

L'invention concerne également les caractéristiques ci-après, considérés isolément ou dans toutes leur combinaison techniquement possibles :
- Les cadres rigides et les cales sont en bois ou en aluminium extrudé afin de limiter leur poids et de les rendre ainsi manipulables sans outillage particulier.
- Les cadres rigides consistent essentiellement en deux profilés de section rectangulaire reliés entre eux par deux traverses plates. Les profilés de section rectangulaire peuvent être réalisés soit sous forme de profilés tubulaires, notamment lorsqu'ils sont fabriqués en métal tel que l'aluminium, ou ils sont en matériau plein, notamment lorsqu'ils sont en bois.
- Les cadres rigides peuvent être disposés l'un derrière l'autre de manière à former soit un ou deux rangs de cadres disposés les uns derrières les autres dans le sens longitudinal du véhicule, soit les uns derrière les autres dans le sens transversal par rapport à la longueur du véhicule.
- Les cadres rigides sont formés soit de manière à les aligner les uns derrière les autres sans les attacher les uns aux autres ou, de préférence, de manière à pouvoir être emboîtés les uns derrière les autres. Pour ce second type de réalisation, les extrémités des profilés à section rectangulaire sont formées à leurs extrémités de manière complémentaire, présentant à l'une des deux extrémités un creux et à l'autre extrémité une partie à section réduite.

En alternative, notamment lorsque le cadre rigide est en bois, les profilés doivent être de section constante sur toute la longueur du profilé et l'emboîtement doit être obtenu au moyen de douilles solidaires de l'une des extrémités de chacun des profilés.
- Les cadres rigides sont munis d'un premier logement destiné à recevoir, par emboîtement, les supports des cales inclinées. Les cales inclinées sont munies à cet effet d'au moins deux supports ayant un double rôle. D'un côté, ces supports doivent tenir une planche à une certaine inclinaison par rapport à l'horizontale et, d'autre part, c'est par ces supports que les cales inclinées s'emboîtent dans les premiers logements des cadres rigides.

Les cales inclinées sont avantageusement munies d'au moins un troisième support disposé entre les deux supports, de préférence à distance égale des deux, afin que les cales peuvent mieux supporter le poids des charges cylindriques.
- Les cadres rigides sont munis de perforations permettant la fixation d'au moins une des cales inclinées de chacun des cadres rigides dans différentes distances de l'autre cale inclinée. Dans cette configuration, les cales inclinées, plus particulièrement leur support, ont également des perforations. Lorsque la cale a été mise en place, elle est arrêtée dans sa position au moyen d'une goupille ou d'un goujon traversant les perforations mises en regard.

Alors que l'emplacement fixe des premiers logements correspond à un mode de réalisation très simple et permettant une installation rapide, il est un peu limitatif dans le sens que la distance fixe entre les deux cales inclinées d'un cadre rigide définie une certaine gamme de dimensions des charges cylindriques susceptible d'être immobilisées par ces cadres rigides. La conception réglable d'au moins une des cales accroît bien sur la gamme des dimensions des charges cylindriques acceptables.
- Le dispositif de fixation comprend des montants destinés à être emboîtés à l'une de leurs extrémités dans des deuxièmes logements prévus à cet effet sur les cales inclinées.
- Le dispositif de fixation comprend des entretoises destinées à relier les extrémités libres des montants lorsque ceux-ci sont montés sur les cales inclinées.

La mise en place de montants et d'entretoises permet le calage des charges cylindriques dans le plan perpendiculaire à leur axe.
- Le dispositif de fixation comprend des moyens d'immobilisation des cadres sur le plateau de chargement du véhicule. Ces moyens d'immobilisation sont destinés à empêcher un mouvement accidentel de ces cadres, tel un glissement, lorsque le véhicule est brusquement freinée ou subit tout autre manoeuvre intempestive. Ces moyens d'immobilisation peuvent être par exemple des sangles ou les chaînes s'accrochant au bord du plateau de véhicule.
- Le dispositif de fixation comprend des moyens de verrouillage destinés à verrouiller les cadres rigides lorsqu'ils sont emboîtés les uns dans les autres. Ces moyens de verrouillage peuvent consister en des éléments individuels telles des broches insérées dans des perforations prévues à cet effet dans les cadres. Ces moyens de verrouillage peuvent également consister en des éléments flexibles ou montés flexiblement de manière telle que le verrouillage se fait automatique lors de l'emboîtement, tel un verrouillage par encliquetage.
- Le dispositif de fixation comprend des pièces intercalaires permettant de solidariser deux cadres rigides disposés l'un à côté de l'autre. Cette disposition est avantageuse aussi bien dans le cas de rangs de cadres disposés longitudinalement sur le plateau du véhicule que dans celui où les cadres sont disposés transversalement par rapport à la longueur du véhicule. Dans un cas comme dans l'autre, les pièces intercalaires sont avantageusement introduites dans des troisièmes logements disposés, de préférence, sur les cales inclinées.

D'autres caractéristiques et avantages de l'invention ressortiront à la lecture d'un exemple de réalisation décrit ci-après en référence aux dessins. Dans ces dessins,
La figure 1 montre un dispositif de fixation selon l'invention formé par quatre cadres rigides, représentés en une vue éclatée; et
La figure 2 montre un cadre rigide du dispositif de fixation de la Fig. 1 plus en détail.

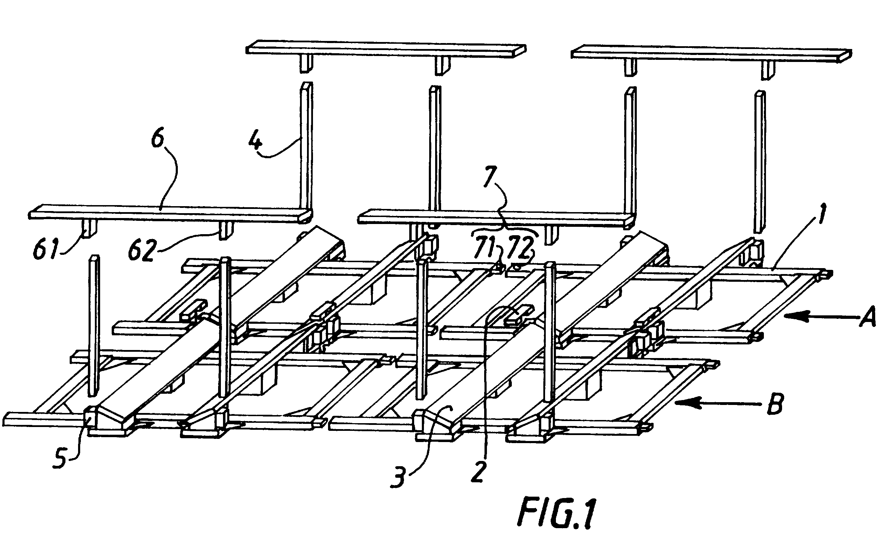

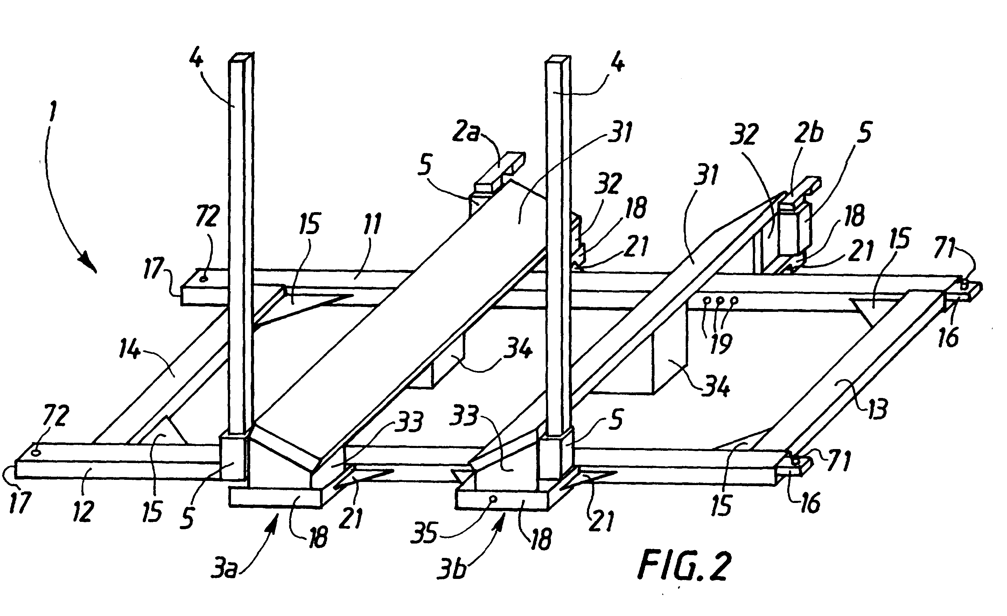

Le dispositif de fixation comprend une pluralité de cadres rigides 1, tous identiques. La figure 1 représente quatre cadres rigides 1 disposés en deux rangs A, B et prêts à être emboîtés l'un dans l'autre, dans chacun des rangs. Les cadres rigides 1 adjacents des deux rangs sont verrouillés entre eux au moyen d'une pièce intercalaire 2. La Figure 2 montre l'intercalaire en l'état verrouillé 2a et en l'état déverrouillé 2b.

Chacun des cadres rigides 1 est formé par deux profilés 11, 12 ayant une section transversale rectangulaire et deux traverses 13, 14 reliant les profilés 11, 12 à proximité de leurs extrémités respectives. Quatre équerres 15 sont disposées aux angles afin de donner aux cadres une meilleure stabilité angulaire.

Les profilés 11 et 12 présentent des extrémités 16 et 17 de formes complémentaires. Les extrémités 16 des profilés 11 et 12 ont la même forme et ont notamment une section transversale rectangulaire de plus petite dimension que celle du profilé 11 ou 12 respectivement. Les extrémités 17 présentent des logements d'un volume et de dimensions intérieures correspondant à la forme et aux dimensions des extrémités 16. Ainsi, les extrémités 16 des profilés 11 et 12 d'un cadre rigide 1 peuvent être emboîtées dans les extrémités 17 des profilés 11 et 12 d'un cadre rigide suivant pour former un rang.

Lorsque les cadres sont orientés dans le sens de la longueur du véhicule, on pose avantageusement le premier cadre de manière telle que les extrémités 17 buttent contre la paroi avant du véhicule.

Le cadre rigide 1 est muni sur les faces extérieures des profiles 11 et 12 de quatre premiers logements 18 dans lesquels sont emboîtés deux cales inclinées 3a et 3b, identiques (donc référencés par la suite aussi indifféremment par "3"), mais disposés sur le cadre 1 avec des inclinaisons opposées afin de former un berceau récepteur d'une charge cylindrique. Chacune des cales inclinées 3 est constituée d'une planche 31, de deux supports 32, 33 disposés aux extrémités de la planche 31 et d'un support 34 disposé approximativement au milieu de la planche 31, c'est à dire à distance égale des deux autres supports 32 et 33. La hauteur des supports 32 et 33 est moindre que la hauteur du support 34, puisque le support 34 repose sur le plancher du plateau du véhicule alors que les supports 32 et 33 sont disposés à l'intérieur des logements 18 munis d'une plaque de fond.

Dans une variante de réalisation, les premiers logements 18 sont réalisés sans plaques de fond. Dans ce cas, les premiers logements 18 sont stabilisés en ce qui concerne leur forme, par des équerres 21, et la hauteur des supports 32 et 33 est la même que celle du support 34.

Indépendamment de la réalisation particulière des premiers logements 18 et des supports 32, 33 et 34, ces derniers ont pour rôle de maintenir la planche 31 à une certaine hauteur au dessus du plancher du plateau du véhicule, mesurée aux bords en regard des planches, et à une inclinaison définie par rapport à celui-ci. De plus, les deux cales inclinées 3 attribuées à un même cadre 1 sont disposées à une distance définie l'une de l'autre, mesurée entre les bords en regard des planches, dans le sens longitudinal des profilés 11, 12. L'inclinaison des planches 31, la distance entre les deux cales inclinées 3 et la hauteur des supports 32, 33 et 34 sont choisies de façon que le berceau constitué par le cadre rigide 1 muni de ces deux cales inclinées 3 puisse recevoir des charges cylindriques dont le diamètre est inclue dans une gamme de diamètres prédéfinis.

Ainsi, à titre d'exemple de dimensions, on peut indiquer que, pour des bobines d'un diamètre allant de 120 cm à 150 cm, les planches 31 ont une inclinaison de 29° et sont tenues à une hauteur de l'ordre de 18 cm. La distance entre les deux cales inclinées 3 est de l'ordre de 46 cm.

Dans une variante de réalisation, les profilés 11 et 12 peuvent être munis de perforations horizontales 19 et les premiers logements 18 peuvent être munis d'une perforation horizontale 35. Cette disposition permet d'obtenir, en positionnant les perforations 35 par rapport aux perforations 19, différentes positions d'une des cales 3 par rapport à l'autre cale 3. La cale inclinée 3 réglable est bloquée dans la position choisie au moyen d'un goujon ou d'une goupille traversant les perforations 19 et 35.

Afin de pouvoir caler les charges cylindriques dans le plan perpendiculaire à leur axe, le cadre rigide 1 comprend des montants verticaux 4 s'emboîtant par l'une de leurs extrémités dans des deuxièmes logements 5 fixés sur les supports 32 et 33 des cales inclinées 3. Les montants 4 disposés sur le même coté du cadre rigide 1 sont reliés entre eux par les entretoises 6 dont chacune est munie de deux troisièmes logements 61, 62 afin de pouvoir relier les extrémités libres des montants 4 par emboîtement de l'entretoise 6 sur les deux montants 4.

Le poids d'un cadre rigide 1 complet, c'est-à-dire muni de ses deux cales inclinées 3, de deux montants 4 et d'une entretoise 6, réalisé en aluminium extrudé est de l'ordre de 36 kg.

Pour réaliser un agencement de deux rangs parallèles A, B de cadres rigides 1, tel que représenté sur la figure 1, les montants 4 sont engagés dans les deuxièmes logements 5 à côté des profilés extérieurs des cadres avoisinant. Les logements correspondant à proximité de deux profilés intérieurs sont utilisés pour y emboîter les pièces intercalaires 2 pour verrouiller les deux cadres avoisinant l'un par rapport à l'autre.

Le verrouillage de deux cadres rigides 1 successifs d'un même rang peut être obtenu par exemple par une goupille 71 montée par ressort dans l'extrémité 16 et un orifice 72 pratiqué dans l'extrémité 17. Lors de l'assemblage des deux cadres, c'est à dire lors de l'emboîtement de l'extrémité 16 de l'un des cadres dans l'extrémité 17 de l'autre cadre rigide, le verrouillage se fait par un cliquetage. Le déverrouillage se fera par la suite en exerçant une pression sur la goupille 71 afin qu'elle rentre dans l'extrémité 16 et ne soit pas retenue par l'orifice 72 lors du desserrement des deux extrémités.

## Revendications

1. Dispositif de fixation amovible de charges cylindriques telles que des bobines sur un véhicule comportant un plateau de chargement, caractérisé en ce qu'il comprend une pluralité de cadres rigides (1) destinés à être posés sur le plateau de chargement successivement les uns derrière les autres de manière à former au moins un rang (A, B) de cadres (1), chacun des cadres rigides (1) étant muni de deux cales inclinées (3) amoviblement fixées sur le cadre (1).

2. Dispositif selon la revendication 1, caractérisé en ce que les cadres rigides (1) sont formés de façon à pouvoir être emboîtés les uns derrière les autres.

3. Dispositif selon l'une des revendications 1 et 2, caractérisé en ce que les cadres rigides (1) sont munis de premiers logements (18), que les cales inclinées (3) comportent des supports (32, 33), les premiers logements (18) étant destinés à recevoir, par emboîtement, les cales inclinées (3).

4. Dispositif selon l'une des revendications 1 et 2, caractérisé en ce que les cadres rigides (1) sont munis de perforations (19) permettant la fixation d'au moins une des cales inclinées (3) de chacun des cadres rigides (1) à différentes distances de l'autre cale inclinée (3).

5. Dispositif selon la revendications 3, caractérisé en ce qu'il comprend des montants verticaux (4) destinés à être emboîtés à l'une de leurs extrémités dans des deuxièmes logements (5) prévus à cet effet sur les cales inclinées (3).

6. Dispositif selon la revendication 5, caractérisé en ce qu'il comprend des entretoises (6) destinées à relier les extrémités libres des montants (4) montés sur les cales inclinées (3).

7. Dispositif selon l'une quelconque des revendications 1 à 6, caractérisé en ce qu'il comprend des moyens d'immobilisation des cadres (1) sur le plateau, destinés à empêcher une mouvement accidentel des cadres (1).

8. Dispositif selon l'une quelconque des revendications 1 à 7, caractérisé en ce qu'il comprend des moyens de verrouillage (7) destinés à verrouiller les cadres rigides (1) emboîtés les uns dans les autres.

9. Dispositif selon l'une quelconque des revendications 1 à 8, caractérisé en ce qu'il comprend des pièces intercalaires (2) permettant de solidariser deux cadres rigides (1) disposés l'un à côté de l'autre.

## Patentansprüche

1. Vorrichtung zur lösbaren Befestigung von zylindrischen Lasten wie Spulen auf einem Fahrzeug, aufweisend eine Ladeplatte,
**gekennzeichnet durch**
mehrere starre Rahmen (1), die auf der Ladeplatte aufeinanderfolgend hintereinander angeordnet werden können, so daß sie wenigstens eine Reihe (A, B) von Rahmen (1) bilden, von denen jeder starre Rahmen (1) mit zwei geneigten, am Rahmen (1) lösbar befestigten Keilen (3) vorsehen ist.

2. Vorrichtung nach Anspruch 1,
**dadurch gekennzeichnet, daß**
die starren Rahmen (1) derart gebildet sind, daß sie einer hinter dem anderen ineinander steckbar sind,

3. Vorrichtung nach Anspruch 1 oder Anspruch 2,
**dadurch gekennzeichnet, daß**
die starren Rahmen (1) mit ersten Aufnahmen (18) versehen sind, daß die geneigten Keile (3) Stützen (32, 33) aufweisen, und daß die schrägen Keile (3) in die ersten Aufnahmen einsteckbar sind.

4. Vorrichtung nach Anspruch 1 oder 2,
**dadurch gekennzeichnet, daß**
die starren Rahmen (1) mit Perforationen (19) versehen sind, die die Befestigung wenigstens eines der geneigten Keile (3) jedes starren Rahmens (1) in unterschiedlichen Abständen vom anderen geneigten Keil (3) ermöglichen.

5. Vorrichtung nach Anspruch 3,
**gekennzeichnet durch**
vertikale Stützen (4), die an einem ihrer Enden in zweite Aufnahmen (5) einsteckbar sind, die hierzu an den geneigten Keilen (3) vorgesehen sind.

6. Vorrichtung nach Anspruch 5,
**gekennzeichnet durch**
Querstreben (6) zur Verbindung der freien Enden der Stützen (4), die auf den geneigten Keilen (3) befestigt sind.

7. Vorrichtung nach einem der Ansprüche 1 bis 6,
**gekennzeichnet durch**
Einrichtungen zum Arretieren der Rahmen (1) auf der Platte, um eine zufällige Bewegung der Rahmen (1) zu verhindern.

8. Vorrichtung nach einem der Ansprüche 1 bis 7,
**gekennzeichnet durch**
Verriegelungseinrichtungen (7), um die starren Rahmen (1) zu verriegeln, die ineinandergesteckt sind.

9. Vorrichtung nach einem der Ansprüche 1 bis 8,
gekennzeichnet durch
Zwischenstücke (2) zur Verbindung zweier starrer Rahmen (1), die nebeneinander angeordnet sind.

## Claims

1. A device for releasably fastening cylindrical objects on a vehicle such as spools comprising a load pallet, characterised in that it comprises a plurality of rigid frames (1) intended for being placed on the load pallet in succession behind one another in order to make at least one row (A, B) of frames (1), whereas each of the rigid frames (1) is provided with two tilted shims (3) releasably fastened to the frame (1).

2. A device according to claim 1, characterised in that the rigid frames (1) are made in such a way that they can be nested behind one another.

3. A device according to one of claims 1 and 2, characterised in that the rigid frames (1) are provided with first recesses (18), that the tilted shims (3) comprise rests (32, 33), whereas the first recesses (18) are intended for accommodating the tilted shims (3), the later nesting into the former.

4. A device according to one of claims 1 and 2, characterised in that the rigid frames (1) are provided with holes (19) enabling fastening at least one of the tilted shims (3) of each rigid frame (1 ) at various distances from the other tilted shim (3).

5. A device according to claim 3, characterised in that it comprises vertical stanchions (4) intended for nesting at one of the ends thereof into second recesses (5) provided on the tilted shims (3) for that purpose.

6. A device according to claim 5, characterised in that it comprises spacers (6) intended for linking the free ends of the stanchions (4) mounted on the tilted shims (3).

7. A device according to any one of claims 1 to 6, characterised in that it comprises means for locking the frames (1) on the pallet, intended for preventing accidental movement of the frames (1).

8. A device according to any one of claims 1 to 7, characterised in that it comprises locking means (7) intended for locking the rigid frames (1) nested into one another.

9. A device according to any one of claims 1 to 8, characterised in that it comprises intermediary parts (2) enabling interconnection of two rigid frames (1) arranged beside one another.
